**Europäisches Patentamt**

**European Patent Office**

**Office européen des brevets**

(19)

(11) Veröffentlichungsnummer: **0 198 118**
**B1**

(12) **EUROPÄISCHE PATENTSCHRIFT**

(45) Veröffentlichungstag der Patentschrift: **09.05.90**

(51) Int. Cl.⁵: **G 02 B 6/16, G 02 B 6/22**

(21) Anmeldenummer: **85115347.8**

(22) Anmeldetag: **03.12.85**

(54) **Einwelliger Lichtwellenleiter aus Quarzglas und Verfahren zu dessen Herstellung.**

(30) Priorität: **20.03.85 DE 3510023**

(43) Veröffentlichungstag der Anmeldung:
**22.10.86 Patentblatt 86/43**

(45) Bekanntmachung des Hinweises auf die
Patenterteilung:
**09.05.90 Patentblatt 90/19**

(84) Benannte Vertragsstaaten:
**AT CH DE FR GB IT LI NL SE**

(56) Entgegenhaltungen:
**EP-A-0 044 712**
**DE-A-3 338 354**
**GB-A-2 145 840**
**GB-A-2 151 369**
**US-A-4 114 980**

**ELECTRONICS LETTERS, Band 16, Nr. 18, 28.**
**August 1980, Seiten 692-693, London, GB; B.J.**
**AINSLIE et al.: "Optimised structure for**
**preparing long ultra-low-loss single-mode**
**fibres"**

(73) Patentinhaber: **Licentia Patent-Verwaltungs-**
**GmbH**
**Theodor-Stern-Kai 1**
**D-6000 Frankfurt/Main 70 (DE)**

(72) Erfinder: **Huber, Hans Peter**
**Paul-Lincke-Strasse 24**
**D-7910 Neu-Ulm (DE)**

(74) Vertreter: **Schulze, Harald Rudolf, Dipl.-Ing. et al**
**Licentia Patent-Verwaltungs-GmbH Theodor-**
**Stern-Kai 1**
**D-6000 Frankfurt/Main 70 (DE)**

(56) Entgegenhaltungen:
**IEEE JOURNAL OF QUANTUM ELECTRONICS,**
**Band QE-17, Nr. 6, Juni 1981, Seiten 835-848,**
**IEEE, New York, US; H. MURATA et al.:**
**"Low-loss single-mode fiber development and**
**splicing research in Japan"**

**IEEE TRANSACTIONS ON MICROWAVE**
**THEORY AND TECHNQUES, Band MTT-30, Nr. 4,**
**April 1982, Seiten 360-369, IEEE, New York, US;**
**B. JAMES AINSLIE et al.: "The design and**
**fabrication of monomode optical fiber"**

Courier Press, Leamington Spa, England.

## Beschreibung

Die Erfindung betrifft ein Verfahren zur Herstellung eines einwelligen Lichtwellenleiters aus Quarzglas.

Lichtwellenleiter zur Übertragung optischer Signale bestehen aus einem lichtführenden Kernbereich und einem diesen umgebenden Mantelbereich, wobei der Kernbereich gegenüber dem Mantelbereich eine geringfügig höhere optische Brechzahl aufweist. Das zu übertragende Licht wird im wesentlichen im Kernbereich geführt, und nur ein verhältnismäßig geringer Anteil des Lichts erstreckt sich in den unmittelbar den Kernbereich umgebenden Mantelbereich.

Bei Lichtwellenleitern für die optische Nachrichtenübertragung werden vielwellige und einwellige Lichtwellenleiter unterschieden. Vielwellige Lichtwellenleiter, insbesondere sogenannte Gradientenprofilfasern, besitzen typisch einen Kerndurchmesser von 50 μm bei einem Außendurchmesser des Mantelbereichs von typisch 125 μm. Einwellige Lichtwellenleiter haben bei gleichem Außendurchmesser des Mantelbereiches typische Kerndurchmesser von 8 μm bis 10 μm. Mit einwelligen Lichtwellenleitern lassen sich sehr viel höhere Übertragungsbandbreiten realisieren als mit vielwelligen Lichtwellenleitern. Diese sind dahur besonders gut geeignet für Fernübertragungsstrecken mit großen Repeaterabständen aber auch im Kurzstreckenbereich (Ortsnetz) für optische Breitbandnetze von Vorteil, insbesondere dann, wenn sie kostengünstiger als vielwellige Lichtwellenleiter herstellbar sind.

Für die optische Nachrichtenübertragungstechnik werden derzeit nahezu ausschließlich Quarzglas-Lichtwellenleiter verwendet. Die Gesamtdispersion von Monomodefasern verschwindet in diesen bei einer Wellenlänge um 1,3 μm, gleichzeitig sind optische Übertragungsverluste unter 0,5 dB/km möglich. Um derart niedrige Verluste zu erreichen darf im lichtführenden Kernbereich und angrenzendem Mantelbereich die OH-Ionenkonzentration höchstens ungefähr 100 ppb betragen, da bei Lichtwellenlängen von 1,24 μm und 1,39 μm OH-Schwingungsbanden im Quarzglas starke optische Übertragungsverluste hervorrufen. Durch Überlappung dieser Absorptionsbanden können im gesamten Spektralbereich von ungefähr 1,2 μm bis 1,55 μm die optischen Verluste ansteigen.

Eine derartig geringe OH-Ionenkonzentration ist in Quarzglas nur mit erheblichem technologischen Aufwand zu erreichen und ist daher kostenungünstig.

Die Herstellung von Lichtwellenleitern aus Quarzglas beruht derzeit nahezu ausschließlich auf der chemischen Gasphasenabscheidung von Quarzglas. Dazu sind verschiedene Verfahren, z.B. das MCVD-, das PCVD-, das OVD- sowie das VAD-Verfahren, entwickelt worden.

Beim MCVD-Verfahren erfolgt die Abscheidung hochreinen Quarzglases aus der Gasphase auf der Innenwandung eines Trägerrohres aus Quarzglas.

Die in geeigneter Weise dotierten abgeschiedenen Quarzglasschichten erzeugen in dem später aus der Vorform hergestelltem Lichtwellenleiter den Kernbereich und einen inneren Mantelbereich, während das Trägerrohr einen äußeren Mantelbereich bildet.

Dieses Herstellungsverfahren ist zur Herstellung von einwelligen Lichtwellenleitern (Monomodefasern) besonders gut geeignet, da bei diesen das Volumen des Kernbereiches relativ klein ist zum Volumen der Gesamtfaser. Es ist daher erforderlich, lediglich wenig hochreines und daher kostenungünstiges Quarzglas auf einem Trägerrohr abzuscheiden, das aus einem wesentlich kostengünstigerem (Quarz-)Material besteht.

Da bei einwelligen Lichtwellenleitern ein Teil des geführten Lichtes sich in den Mantelbereich erstreckt, muß unmittelbar um den Kernbereich noch ein innerer Mantelbereich aus ebenfalls hochreinem Quarz-Material vorhanden sein. Dazu ist ein Durchmesser von ungefähr 4a erforderlich, wenn 2a der Durchmesser des Kernbereiches ist. Wenn jedoch im Trägerrohr, das aus billigem Quarzglas besteht, $OH^-$-Ionen vorhanden sind, können diese während der Vorformherstellung und während des Faserziehens in den inneren Mantelbereich diffundieren und zu einem erheblichen Dämpfungsanstieg führen. Die Diffusion von OH-Ionen wurde z.B. in einer in der Zeitschrift "Japanese Journal of Applied Physics" Vol. 17, No. 11, Nov. 78, Seiten 1975 bis 1981 veröffentlichten Arbeit untersucht. Dort ist beschrieben, daß das Mantel- zu Kernradienverhältnis ungefähr fünf oder größer sein muß, um bei einer Lichtwellenlänge von 1,39 μm eine OH-Absorption von weniger als 20 dB/km zu erhalten.

Aus den Druckschriften Electronics Letters, Band 16, No. 18, August 1980, Seiten 692—693, sowie der im wesentlichen inhaltsgleichen EP—A—044 712 ist es bekannt, nach dem Innenbeschichtungsverfahren eines Quarzglas-Trägerrohres einen einwelligen Lichtwellenleiter (Monomode-Lichtwellenleiter) mit folgendem Aufbau herzustellen. Ein lichtführender Kern mit dem Radius a, aus dotiertem Quarzglas ist umgeben von einem ersten Mantelbereich, einer undotierten 0,5a dicken Quarzglasschicht. Diese ist umgeben von einem kompensiert dotiertem 3,5a dicken zweiten Mantelbereich, der von einem dritten Mantelbereich umgeben ist. Letzterer entspricht dem ursprünglichen Quarzglas-Trägerrohr. Alle Mantelbereiche haben im wesentlichen den gleichen Brechungsindex.

Aus der Druckschrift IEEE Transactions on Microwave Theory and Techniques, Band MTT-30, April 1982, Seiten 360—369 ist ein nach dem Innenbeschichtungsverfahren hergestellter einwelliger Lichtwellenleiter bekannt, bei welchem der Kernbereich, mit dem Radius a, von einem ersten Mantelbereich mit nach außen zunehmender $P_2O_5$-F-Konzentration umgeben ist. Dieser erste Mantelbereich hat einen Außendurchmesser von 2a. Der erste Mantelbereich ist umgeben von einem zweiten Mantelbereich mit einem Außendurchmesser von 5a und einer konstanten

P₂O₅-F-Konzentration. Der zweite Mantelbereich ist umgeben von einem dritten Mantelbereich, welcher dem ursprünglichen Quarzglas-Trägerrohr entspricht. Alle Mantelbereiche besitzen im wesentlichen die gleiche Brechzahl.

Aus der US—A—4 114 980 ist weiterhin ein Quarzglas-Lichtwellenleiter bekannt, bestehend aus einem Kernbereich und mindestens einem diesen umgebenden ersten Mantelbereich. Dieser ist umgeben von einer Sperrschicht, welche eine OH⁻-Ionen-Diffusion verhindern soll. Die Sperrschicht ist umgeben von einem zweiten Mantelbereich, welcher dem ursprünglichen Quarzglas-Trägerrohr entspricht.

Der Erfindung liegt die Aufgabe zugrunde, ein Verfahren anzugeben, mit dem ein einwelliger Quarzglas-Lichtwellenleiter, der insbesondere in den Spektralbereichen um 1,3 µm sowie um 1,56 µm besonders niedrige optische Übertragungs-verluste aufweist, kostengünstig herstellbar ist.

Diese Aufgabe wird gelöst durch das in dem Patentanspruch 1 angegebenen Merkmal. Vorteilhafte Ausgestaltungen und/oder Weiterbildungen sind den Unteransprüchen entnehmbar.

Ein Vorteil der Erfindung besteht darin, daß bei einem Innenbeschichtungsverfahren nur wenige Quarzglasschichten mit einer extrem niedrigen OH⁻-Ionenkonzentration von kleiner als 10 ppb abgeschieden werden müssen. Der überwiegende Teil der Faser als äußerer Mantelbereich kann dagegen aus kostengünstigem Quarzglas bestehen.

Die Erfindung beruht auf der Erkenntnis, daß bei Verwendung von Quarzglasrohren aus billigem geschmolzenem Naturquarz mit einem OH-Ionengehalt von 2 bis 10 ppm und bei Abscheidungsraten von größer 0,5 g/min die OH-Diffusion in die abgeschiedenen Quarzglasschichten so gering ist, daß sie praktisch vernachlässigt werden kann.

Die Erfindung wird im folgenden anhand eines Ausführungsbeispieles näher erläutert.

### Beispiel

Zur Herstellung eines einwelligen Lichtwellenleiters mit einem sogenannten "matched-clad-ding"-Brechzahlprofil und einer sogenannten "cut-off"-Lichtwellenlängen von ungefähr 1,25 µm wird zunächst ein Quarzglas-Trägerrohr mit einem Außendurchmesser von ungefähr 20 mm und einer Wandstärke von ungefähr 2 mm chemisch gereinigt, z.B. durch Ätzen. Das Trägerrohr wird anschließend auf ungefähr 2000 K erhitzt und dabei gleichzeitig der Innenraum mit Chlorgas gespült. Dadurch entsteht bei dem Trägerrohr angrenzend an dessen Innenwand ein an OH⁻-Ionen verarmter Bereich. Durch Innenbeschichtung des Trägerrohres nach dem eingangs erwähnten MCVD-Verfahren werden nun eine oder mehrere undotierte und/oder kompensiert dotierte Quarzglasschichten aufgebracht, welche eine Gesamtdicke von ungefähr 200 µm besitzen und welche den inneren Mantelbereich bilden bei dem fertigen Lichtwellenleiter. Für den inneren Mantelbereich werden Dotierstoffe gewählt, wie z.B. Fluor, GeO₂, P₂O₅, derart, daß dessen optische Brechzahl im wesentlichen gleich derjenigen des Trägerrohres ist. Auf diese dem inneren Mantelbereich entsprechende Quarzglasschichten werden anschließend dotierte Quarzglasschichten mit einer Dicke von ungefähr 50 µm aufgebracht, welche dem Kernbereich entsprechen. Dafür ist als Dotierstoff beispiels-weise GeO₂ und/oder P₂O₅ geeignet. Danach wird das innenbeschichtete Trägerrohr zu einem Vor-formstab kollabiert, zur mechanischen Verstär-kung des äußeren Mantelbereiches mit einem weiteren kostengünstigen Quarzglasrohr überfangen und zu einem einwelligen Lichtwellenleiter ausgezogen. Dieser besitzt dann einen Kernbereich mit einem Außendurchmesser von unge-fähr 8,5 µm, einen inneren Mantel bereich mit einem Außendurchmesser von ungefähr 20 µm sowie einen äußeren Mantelbereich mit einem Außendurchmesser von ungefähr 125 µm.

### Patentansprüche

1. Verfahren zur Herstellung eines einwelligen Lichtwelleiters aus Quarzglas, bestehend aus einem lichtführenden Kernbereich, einem diesen umgebenden inneren Mantelbereich und einem diesen umgebenden äußeren Mantelbereich, der einen an den inneren Mantelbereich angrenzenden Bereich mit einer OH⁻-Ionenkonzentration kleiner als 100 ppb und einer Dicke größer als 5 µm besitzt, wobei die Brechzahlen des inneren und des äußeren Mantelbereichs im wesentlichen gleich sind, wobei die Brechzahl des Kernbereichs größer ist als diejenige der Mantelbereiche und wobei das Verhältnis des Außendurchmessers des inneren Mantelbereiches zu dem Außendurchmesser des Kernbereiches in einem Wertebereich zwischen 1,8 und 3,5 liegt, bei welchem Verfahren

ein Innenbeschichtungsverfahren eines aus Quarzglas bestehenden Trägerrohres, aus welchem der äußere Mantelbereich entsteht, angewandt wird,

der Innenraum des Trägerrohres zunächst mit einem halogenhaltigem Gas gespült wird bei einer Temperatur, die in einem Temperaturbereich von 1800 K bis 2000 K liegt, derart, daß angrenzend an die Innenfläche des Trägerrohres der Bereich mit einer OH⁻-Ionenkonzentration kleiner als 100 ppb und einer Dicke größer als 5 µm entsteht,

auf die Innenfläche anschließend eine Schicht, welche dem inneren Mantelbereich entspricht, aufgebracht wird,

darauf eine Schicht oder Schichtenfolge, welche dem Kernbereich des Lichtwellenleiters entspricht, aufgebracht wird, und

eine derartige Vorform zu dem Lichtwellenleiter ausgezogen wird.

2. Verfahren zur Herstellung eines einwelligen Lichtwellenleiters nach Anspruch 1, dadurch gekennzeichnet, daß als halogenhaltiges Gas ein chlorhaltiges Gas verwendet wird.

3. Verfahren zur Herstellung eines einwelligen Lichtwellenleiters nach Anspruch 1, dadurch gekennzeichnet, daß als halogenhaltiges Gas ein fluorhaltiges Gas verwendet wird.

## Revendications

1. Procédé de fabrication d'un conducteur d'ondes lumineuses monomodes en verre de quartz, constitué d'une zone noyau, conductrice de la lumière, d'une zone enveloppe intérieure qui l'entoure et d'une zone enveloppe extérieure qui entoure cette dernière et qui présente une zone, jouxtant la zone enveloppe intérieure, d'une concentration en ions OH⁻ inférieure à 100 ppb (parties par milliard) et une épaisseur supérieure à 5 µm, étant précisé que les indices de réfraction de la zone enveloppe intérieure et de la zone enveloppe extérieure sont essentiellement identiques, que l'indice de réfraction de la zone noyau est supérieure à celui des zones enveloppes et que le rapport entre le diamètre extérieure de la zone enveloppe intérieure et le diamètre extérieur de la zone noyau se situe sur une plage allant de 1,8 à 3,5, procédé dans lequel:

on applique un procédé de revêtement intérieur à un tube support, constitué de verre de quartz, qui donne la zone enveloppe extérieure,

on rince d'abord l'intérieur du tube support avec un gaz contenant un halogène, à une température qui se situe sur une plage de température allant de 1800 K à 2000 K de façon que, jouxtant la surface intérieure du tube support, apparaisse·la zone à concentration en ions OH⁻ inférieur à 100 ppb et d'une épaisseur supérieure à 5 µm,

on applique ensuite sur la surface intérieure une couche qui correspond à la zone enveloppe intérieure,

on applique ensuite une couche, ou une succession de couches, qui correspond, ou qui correspondent, à la zone noyau du conducteur d'ondes lumineuses,

— on étire une préforme de ce type pour donner le conducteur d'ondes lumineuses.

2. Procédé de fabrication d'un conducteur d'ondes lumineuses monomode selon la revendication 1, caractérisé en ce que comme gaz contenant un halogène, on emploie un gaz contenant du chlore.

3. Procédé de fabrication d'un conducteur d'ondes lumineuses monomode selon la revendication 1, caractérisé en ce que comme gaz contenant un halogène, on emploie un gaz contenant du fluor.

## Claims

1. Method for the production of a single mode optical conductor of quartz glass and consisting of a light-conducting core region, an inner sheath region surrounding this and an outer sheath region surrounding this and possessing a region, which adjoins the inner sheath region, with an OH— ion concentration smaller than 100 parts per billion and a thickness greater than 5 micrometres, wherein the refractive indices of the inner sheath region and of the outer sheath region are substantially equal, wherein the refractive index of the core region is greater than that of the sheath regions and wherein the ratio of the outer diameter of the inner sheath region to the outer diameter of the core region lies in a value range of between 1.8 and 3.5, in which method

an internal coating process of a carrier tube, which consists of quartz glass and from which the outer sheath region arises, is applied,

the internal space of the carrier tube is initially flushed by a gas containing halogen and being at a temperature which lies in a temperature range of between 1800°K to 2000°K in such a manner that the region with an OH— ion concentration smaller than 100 parts per billion and a thickness greater than 5 micrometres arises adjacent the inward surface of the carrier tube,

a layer, which corresponds to the inner sheath region, is subsequently applied onto the inward surface,

a layer or a sequence of layers, which corresponds to the core region of the optical conductor, is applied thereon and

such a preform is then drawn out into the optical conductor.

2. Method for the production of a single mode optical conductor according to claim 1, characterised thereby, that a gas containing chlorine is used as gas containing halogen.

3. Method for the production of a single mode optical conductor according to claim 1, characterised thereby, that a gas containing fluorine is used as gas containing halogen.